(19) Europäisches Patentamt
European Patent Office
Office européen des brevets

(11) **EP 4 742 562 A1**

(12) **EUROPEAN PATENT APPLICATION**
published in accordance with Art. 153(4) EPC

(43) Date of publication:
**13.05.2026 Bulletin 2026/20**

(21) Application number: **24853416.6**

(22) Date of filing: **04.07.2024**

(51) International Patent Classification (IPC):
**H04B 10/564** (2013.01)

(52) Cooperative Patent Classification (CPC):
**H04B 10/532; H04B 10/564; H04B 10/60**

(86) International application number:
**PCT/CN2024/103564**

(87) International publication number:
**WO 2025/036001 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.08.2023 CN 202311034394**

(71) Applicant: **Huawei Technologies Co., Ltd.
Shenzhen, Guangdong 518129 (CN)**

(72) Inventors:
- **WANG, Dawei
  Guangzhou, Guangdong 510275 (CN)**
- **MA, Huixiao
  Shenzhen, Guangdong 518129 (CN)**
- **LU, Yao
  Shenzhen, Guangdong 518129 (CN)**
- **LIAN, Kunjian
  Guangzhou, Guangdong 510275 (CN)**

(74) Representative: **Gill Jennings & Every LLP
The Broadgate Tower
20 Primrose Street
London EC2A 2ES (GB)**

(54) **SIGNAL PROCESSING METHOD AND RELATED APPARATUS**

(57) Embodiments of this application disclose a signal processing method and a related apparatus. The signal processing method may be applied to an optical communication scenario. The method in embodiments of this application includes: A transmitter inverts polarities of some symbols in a first modulated signal to obtain a second modulated signal, so that an absolute value of a sum of values of all symbols in the second modulated signal is less than an absolute value of a sum of values of all symbols in the first modulated signal. In this way, power of a low-frequency part in the second modulated signal is suppressed. This helps a receiver perform direct current removal on the signal to resist impact of low-frequency noise on a channel on transmission performance. In addition, the receiver performs inverse transformation of power spectrum adjustment on the received signal based on identification information, to restore the original signal that is before the transmitter performs power spectrum adjustment.

FIG. 3

EP 4 742 562 A1

**Description**

This application claims priority to Chinese Patent Application No. 202311034394.8, filed with the China National Intellectual Property Administration on August 15, 2023 and entitled "SIGNAL PROCESSING METHOD AND RELATED APPARATUS", which is incorporated herein by reference in its entirety.

**TECHNICAL FIELD**

Embodiments of this application relate to the field of optical communication, and in particular, to a signal processing method and a related apparatus.

**BACKGROUND**

In actual deployment of an optical communication system, an impairment effect from a channel causes signal quality degradation, and a bit error rate of signals significantly increases. In this case, transmission performance of the optical communication system is limited. For an application scenario of short-distance optical interconnection, a solution combining intensity-modulation direct-detection (Intensity-Modulation Direct-Detection, IMDD) and a higher-order modulation format is mainly used, but a higher-order modulated signal is extremely vulnerable to impact of low-frequency noise such as a baseline drift. In addition, signal distortion caused by chromatic dispersion (Chromatic dispersion, CD) brings extra transmission penalties. In this case, transmission bandwidth of the system is limited.

In conventional technologies, to reduce impact of the low-frequency noise and the chromatic dispersion on optical transmission, an equalization algorithm is usually used at a receiver for channel compensation. However, if processing is performed only at the receiver, problems such as high algorithm complexity and an insufficient compensation capability in a harsh environment exist.

**SUMMARY**

Embodiments of this application provide a signal processing method and a related apparatus. A transmitter inverts polarities of some symbols in a modulated signal, to suppress power of a low-frequency part. This helps resist impact of low-frequency noise on a channel on transmission performance.

According to a first aspect, an embodiment of this application provides a signal processing method. The method is applied to a transmitter. Specifically, the transmitter obtains a first modulated signal, where the first modulated signal includes M first symbol sets, each first symbol set includes N symbols, and both M and N are integers greater than 1. For example, N is usually an integer multiple of 2. It should be understood that each first symbol set may also be referred to as a symbol block (block), and each symbol in the block may include a plurality of bits. Then, the transmitter inverts a polarity of at least one symbol in at least one first symbol set in the first modulated signal to obtain a second modulated signal including $M \times N$ symbols. An absolute value of a sum of values of all the symbols in the second modulated signal is less than an absolute value of a sum of values of all symbols in the first modulated signal. Further, the transmitter sends the second modulated signal.

Further, the sum of the values of all the symbols in the second modulated signal is less than or equal to a maximum value of a single symbol in the second modulated signal.

In this implementation, the transmitter inverts polarities of some symbols in the first modulated signal to obtain the second modulated signal, so that the absolute value of the sum of the values of all the symbols in the second modulated signal is less than the absolute value of the sum of the values of all the symbols in the first modulated signal. In this way, power of a low-frequency part in the second modulated signal is suppressed. This helps a receiver perform direct current removal on the signal to resist impact of low-frequency noise on a channel on transmission performance. Compared with a manner of performing channel compensation at the receiver, the processing manner at the transmitter has lower complexity.

In some possible implementations, inverting the polarity of the at least one symbol in the at least one first symbol set in the first modulated signal includes: determining a value $j_{min}$ of j corresponding to a minimum sum of values of all symbols in an $i^{th}$ second symbol set, where the $i^{th}$ second symbol set is obtained by inverting polarities of all symbols after a $j^{th}$ symbol in an $i^{th}$ first symbol set, $0 \leq i \leq M-1$, and $0 \leq j \leq N-2$; and inverting polarities of all symbols after a $j_{min}^{th}$ symbol in the $i^{th}$ first symbol set. In this implementation, for the $i^{th}$ first symbol set, there are N-1 different polarity inversion manners in total to obtain $i^{th}$ second symbol sets, and a polarity inversion manner in which the minimum sum of the values of all the symbols in the $i^{th}$ second symbol set is obtained is selected from the N-1 different polarity inversion manners, so that an effect of suppressing power of the second modulated signal at a low frequency can be improved.

In some possible implementations, the method further includes: generating identification information, where the identification information indicates a position of the $j_{min}^{th}$ symbol in the $i^{th}$ first symbol set. It should be understood that the transmitter further sends the identification information to the receiver, so that the receiver performs inverse transformation of power spectrum adjustment on a received signal based on the identification information, to restore the original signal that is before the transmitter performs power spectrum adjustment.

In some possible implementations, the sum of the values of all the symbols in the second modulated signal is equal to 0. In other words, the sum of the values of all the symbols in the second modulated signal is the minimum. This helps suppress power of the second modulated signal at a low frequency to a maximum extent, and achieve a better implementation effect.

In some possible implementations, inverting the polarity of the at least one symbol in the at least one first symbol set in the first modulated signal includes: obtaining a sum of values of all symbols in an $i^{th}$ first symbol set, where $0 \leq i \leq M-1$; and if the sum of the values of all the symbols in the $i^{th}$ first symbol set is equal to 0, keeping polarities of all the symbols in the $i^{th}$ first symbol set unchanged; or if the sum of the values of all the symbols in the $i^{th}$ first symbol set is not equal to 0, inverting a polarity of at least one symbol in the $i^{th}$ first symbol set to obtain an $i^{th}$ second symbol set, where a sum of values of all symbols in the $i^{th}$ second symbol set is equal to 0. In the foregoing manner, a sum of values in each symbol set in the second modulated signal may be 0, and the sum of the values of all the symbols in the second modulated signal is also equal to 0, so that a power spectrum of the low-frequency part in the second modulated signal can be compressed to a maximum extent.

In some possible implementations, inverting the polarity of the at least one symbol in the $i^{th}$ first symbol set to obtain the $i^{th}$ second symbol set includes: inverting polarities of all symbols after a $j^{th}$ symbol in the $i^{th}$ first symbol set to obtain the $i^{th}$ second symbol set, where $0 \leq j \leq N-2$. This implementation provides a specific implementation of performing symbol polarity inversion, and has a better practical effect.

In some possible implementations, the method further includes: generating identification information, where the identification information indicates a position of a $j^{th}$ symbol in the $i^{th}$ second symbol set. It should be understood that the transmitter further sends the identification information to the receiver, so that the receiver performs inverse transformation of power spectrum adjustment on a received signal based on the identification information, to restore the original signal that is before the transmitter performs power spectrum adjustment.

In some possible implementations, before sending the second modulated signal, the method further includes: interleaving the symbols in the second modulated signal. For an interleaved second modulated signal, in addition to a low-frequency part of a power spectrum being compressed, another frequency like an intermediate-frequency part or a high-frequency part of the power spectrum can be further compressed.

In some possible implementations, the second modulated signal includes $N_{shape}$ symbol groups, each symbol group includes K symbols, $M \times N = N_{shape} \times K$, $N_{shape}$ is an integer greater than 1, and K is an integer greater than 1. The interleaved second modulated signal is represented as: {a $0^{th}$ symbol in a $0^{th}$ symbol group, a $0^{th}$ symbol in a $1^{st}$ symbol group, ..., a $0^{th}$ symbol in an $(N_{shape} - 1)^{th}$ symbol group, a $1^{st}$ symbol in the $0^{th}$ symbol group, a $1^{st}$ symbol in the $1^{st}$ symbol group, ..., a $1^{st}$ symbol in the $(N_{shape} - 1)^{th}$ symbol group, ..., a $(K-1)^{th}$ symbol in the $0^{th}$ symbol group, a $(K-1)^{th}$ symbol in the $1^{st}$ symbol group, ..., a $(K-1)^{th}$ symbol in the $(N_{shape} - 1)^{th}$ symbol group}.

In some possible implementations, after obtaining the first modulated signal, and before inverting the polarity of the at least one symbol in the at least one first symbol set in the first modulated signal to obtain the second modulated signal including the $M \times N$ symbols, the method further includes: interleaving the symbols in each first symbol set in the first modulated signal. After inverting the polarity of the at least one symbol in the at least one first symbol set in the first modulated signal to obtain the second modulated signal including the $M \times N$ symbols, and before outputting the second modulated signal, the method further includes: de-interleaving the symbols in the second modulated signal based on how they are interleaved. For a de-interleaved second modulated signal, in addition to a low-frequency part of a power spectrum being compressed, another frequency like an intermediate-frequency part or a high-frequency part of the power spectrum can be further compressed.

In some possible implementations, each first symbol set in the first modulated signal includes R consecutive symbol subsets, each symbol subset includes L symbols, $N = R \times L$, R is an integer greater than 1, and L is an integer greater than 1. A first symbol set in an interleaved first modulated signal is represented as: {a $0^{th}$ symbol in a $0^{th}$ symbol subset, a $0^{th}$ symbol in a $1^{st}$ symbol subset, ..., a $0^{th}$ symbol in an $(R - 1)^{th}$ symbol subset, a $1^{st}$ symbol in the $0^{th}$ symbol subset, a $1^{st}$ symbol in the $1^{st}$ symbol subset, ..., a $1^{st}$ symbol in the $(R - 1)^{th}$ symbol subset, ..., an $(L-1)^{th}$ symbol in the $0^{th}$ symbol subset, an $(L-1)^{th}$ symbol in the $1^{st}$ symbol subset, ..., an $(L-1)^{th}$ symbol in the $(R - 1)^{th}$ symbol subset}.

According to a second aspect, an embodiment of this application provides a signal processing method. The method is applied to a receiver. Specifically, the receiver receives a first signal and identification information that are sent by a transmitter through a channel. The first signal includes a signal sent by the transmitter and interference in channel transmission. Then, the receiver performs direct current removal on the first signal to obtain a second signal, and the second signal may be considered as the signal sent by the transmitter. The second signal includes M symbol sets, each symbol set includes N symbols, M is an integer greater than 1, and N is an integer greater than 1. The identification information indicates polarity inversion statuses of the symbols in each symbol set. Further, the receiver inverts a polarity of at least one symbol in at least one symbol set based on the identification information to obtain a third signal including $M \times N$

symbols, so as to restore an original signal of the transmitter.

In this implementation, the receiver performs direct current removal on the signal. This helps resist low-frequency noise on the channel. In addition, the receiver performs inverse transformation of power spectrum adjustment on the received signal based on the identification information, to restore the original signal that is before the transmitter performs power spectrum adjustment.

In some possible implementations, inverting the polarity of the at least one symbol in the at least one second symbol set based on the identification information includes: determining a $j^{th}$ symbol in an $i^{th}$ second symbol set based on the identification information, where $0 \leq i \leq M-1$, and $0 \leq j \leq N-2$; and inverting polarities of all symbols after the $j^{th}$ symbol in the $i^{th}$ second symbol set.

According to a third aspect, an embodiment of this application provides a chip. The chip includes a processor and a memory, the memory and the processor are connected to each other through a line, the memory stores instructions, and the processor is configured to perform the method described in any one of the implementations of the first aspect and the second aspect.

According to a fourth aspect, an embodiment of this application provides a transmitter device. The transmitter device includes a processing unit and a sending unit. The processing unit is configured to: obtain a first modulated signal, where the first modulated signal includes M first symbol sets, each first symbol set includes N symbols, M is an integer greater than 1, and N is an integer greater than 1; and invert a polarity of at least one symbol in at least one first symbol set in the first modulated signal to obtain a second modulated signal including $M \times N$ symbols, where an absolute value of a sum of values of all the symbols in the second modulated signal is less than an absolute value of a sum of values of all symbols in the first modulated signal. The sending unit is configured to send the second modulated signal.

In some possible implementations, the processing unit is specifically configured to: determine a value $j_{min}$ of j corresponding to a minimum sum of values of all symbols in an $i^{th}$ second symbol set, where the $i^{th}$ second symbol set is obtained by inverting polarities of all symbols after a $j^{th}$ symbol in an $i^{th}$ first symbol set, $0 \leq i \leq M-1$, and $0 \leq j \leq N-2$; and invert polarities of all symbols after a $j_{min}^{th}$ symbol in the $i^{th}$ first symbol set.

In some possible implementations, the processing unit is further configured to generate identification information, where the identification information indicates a position of the $j_{min}^{th}$ symbol in the $i^{th}$ first symbol set.

In some possible implementations, the sum of the values of all the symbols in the second modulated signal is equal to 0.

In some possible implementations, the processing unit is specifically configured to: obtain a sum of values of all symbols in an $i^{th}$ first symbol set, where $0 \leq i \leq M-1$; and if the sum of the values of all the symbols in the $i^{th}$ first symbol set is equal to 0, keep polarities of all the symbols in the $i^{th}$ first symbol set unchanged; or if the sum of the values of all the symbols in the $i^{th}$ first symbol set is not equal to 0, invert a polarity of at least one symbol in the $i^{th}$ first symbol set to obtain an $i^{th}$ second symbol set, where a sum of values of all symbols in the $i^{th}$ second symbol set is equal to 0.

In some possible implementations, the processing unit is specifically configured to invert polarities of all symbols after a $j^{th}$ symbol in the $i^{th}$ first symbol set to obtain the $i^{th}$ second symbol set, where $0 \leq j \leq N-2$.

In some possible implementations, the processing unit is further configured to generate identification information, where the identification information indicates a position of a $j^{th}$ symbol in the $i^{th}$ second symbol set.

In some possible implementations, before sending the second modulated signal, the processing unit is further configured to interleave the symbols in the second modulated signal.

In some possible implementations, the second modulated signal includes $N_{shape}$ symbol groups, each symbol group includes K symbols, $M \times N = N_{shape} \times K$, $N_{shape}$ is an integer greater than 1, and K is an integer greater than 1. An interleaved second modulated signal is represented as: {a $0^{th}$ symbol in a $0^{th}$ symbol group, a $0^{th}$ symbol in a $1^{st}$ symbol group, ..., a $0^{th}$ symbol in an $(N_{shape} - 1)^{th}$ symbol group, a $1^{st}$ symbol in the $0^{th}$ symbol group, a $1^{st}$ symbol in the $1^{st}$ symbol group, ..., a $1^{st}$ symbol in the $(N_{shape} - 1)^{th}$ symbol group, ..., a $(K-1)^{th}$ symbol in the $0^{th}$ symbol group, a $(K-1)^{th}$ symbol in the $1^{st}$ symbol group, ..., a $(K-1)^{th}$ symbol in the $(N_{shape} - 1)^{th}$ symbol group}.

In some possible implementations, after obtaining the first modulated signal, and before inverting the polarity of the at least one symbol in the at least one first symbol set in the first modulated signal to obtain the second modulated signal including the $M \times N$ symbols, the processing unit is further configured to interleave the symbols in each first symbol set in the first modulated signal. After inverting the polarity of the at least one symbol in the at least one first symbol set in the first modulated signal to obtain the second modulated signal including the $M \times N$ symbols, and before sending the second modulated signal, the processing unit is further configured to de-interleave the symbols in the second modulated signal based on how they are interleaved.

In some possible implementations, each first symbol set in the first modulated signal includes R consecutive symbol subsets, each symbol subset includes L symbols, $N = R \times L$, R is an integer greater than 1, and L is an integer greater than 1. A first symbol set in an interleaved first modulated signal is represented as: {a $0^{th}$ symbol in a $0^{th}$ symbol subset, a $0^{th}$ symbol in a $1^{st}$ symbol subset, ..., a $0^{th}$ symbol in an $(R - 1)^{th}$ symbol subset, a $1^{st}$ symbol in the $0^{th}$ symbol subset, a $1^{st}$ symbol in the $1^{st}$ symbol subset, ..., a $1^{st}$ symbol in the $(R - 1)^{th}$ symbol subset, ..., an $(L-1)^{th}$ symbol in the $0^{th}$ symbol subset, an $(L-1)^{th}$ symbol in the $1^{st}$ symbol subset, ..., an $(L-1)^{th}$ symbol in the $(R - 1)^{th}$ symbol subset}.

According to a fifth aspect, an embodiment of this application provides a receiver device. The receiver device includes a receiving unit and a processing unit. The receiving unit is configured to receive a first signal and identification information that are sent by a transmitter through a channel. The processing unit is configured to: perform direct current removal on the first signal to obtain a second signal, where the second signal includes M symbol sets, each symbol set includes N symbols, M is an integer greater than 1, N is an integer greater than 1, and the identification information indicates polarity inversion statuses of the symbols in each symbol set; and invert a polarity of at least one symbol in at least one symbol set based on the identification information to obtain a third signal including $M \times N$ symbols.

In some possible implementations, the processing unit is specifically configured to: determine a $j^{th}$ symbol in an $i^{th}$ second symbol set based on the identification information, where $0 \leq i \leq M-1$, and $0 \leq j \leq N-2$; and invert polarities of all symbols after the $j^{th}$ symbol in the $i^{th}$ second symbol set.

According to a sixth aspect, an embodiment of this application provides a communication system. The communication system includes the transmitter device described in any one of the implementations of the fourth aspect and the receiver device described in any one of the implementations of the fifth aspect.

It can be learned from the foregoing technical solutions that embodiments of this application have the following advantages:

A transmitter inverts polarities of some symbols in a first modulated signal to obtain a second modulated signal, so that a sum of values of all symbols in the second modulated signal is less than or equal to a maximum value of a single symbol in the second modulated signal. In this way, power of a low-frequency part in the second modulated signal is suppressed. This helps resist impact of low-frequency noise on a channel on transmission performance. Compared with a manner of performing channel compensation at a receiver, the processing manner at the transmitter has lower complexity.

## BRIEF DESCRIPTION OF DRAWINGS

FIG. 1 is a diagram of a communication system to which an embodiment of this application is applied;

FIG. 2(a) is a diagram of a first implementation of a transmitter according to an embodiment of this application;

FIG. 2(b) is a diagram of a second implementation of a transmitter according to an embodiment of this application;

FIG. 3 is a first schematic flowchart of a signal processing method according to an embodiment of this application;

FIG. 4 is a diagram of compressing a power spectrum of a low-frequency part according to an embodiment of this application;

FIG. 5 is a diagram of a correspondence between an OH and compressed bandwidth according to an embodiment of this application;

FIG. 6(a) to FIG. 6(c) show several possible compressed frequency positions in a power spectrum;

FIG. 7 is a second schematic flowchart of a signal processing method according to an embodiment of this application;

FIG. 8 is a diagram of performing direct current removal by a receiver according to an embodiment of this application;

FIG. 9 is a diagram of a structure of a transmitter device according to an embodiment of this application;

FIG. 10 is a diagram of another structure of a transmitter device according to an embodiment of this application;

FIG. 11 is a diagram of a structure of a receiver device according to an embodiment of this application; and

FIG. 12 is a diagram of another structure of a receiver device according to an embodiment of this application.

## DESCRIPTION OF EMBODIMENTS

Embodiments of this application provide a signal processing method and a related apparatus. A transmitter inverts polarities of some symbols in a modulated signal, to suppress power of a low-frequency part. This helps resist impact of low-frequency noise on a channel on transmission performance.

It should be noted that in the specification, claims, and the foregoing accompanying drawings of this application, the terms "first", "second", and the like are intended to distinguish between similar objects but do not limit a specific order or sequence. It should be understood that the foregoing terms may be interchanged in proper cases, so that embodiments described in this application can be implemented in an order other than the content described in this application. In addition, the terms "include", "have", and any other variant thereof are intended to cover a non-exclusive inclusion. For example, a process, a method, a system, a product, or a device that includes a series of steps or units is not necessarily limited to those expressly listed steps or units, but may include other steps or units not expressly listed or inherent to the process, the method, the product, or the device.

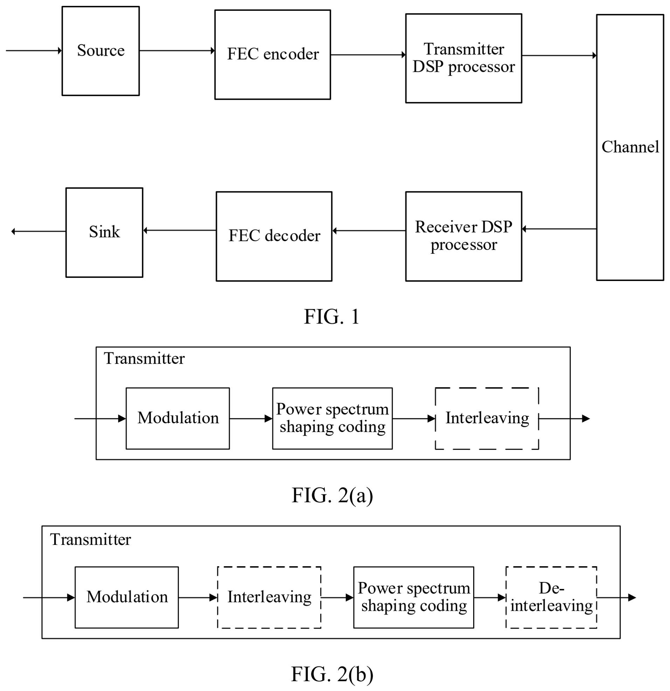

FIG. 1 is a diagram of a communication system to which an embodiment of this application is applied. As shown in FIG. 1, at a transmitter, a source provides a to-be-sent data stream. An encoder receives and encodes the data stream. Encoded codeword information combining a parity bit and an information bit is sent to a transmitter digital signal processing (Digital Signal Processing, DSP) processor for framing, and is transmitted through a channel to a receiver. After receiving a signal with distortion resulting from noise or other impairment on the channel, the receiver sends the signal to a receiver DSP processor for chromatic dispersion compensation, synchronization, phase recovery, and other operations. Then, a decoder performs decoding to restore original data, and sends the data to a sink.

FIG. 2(a) is a diagram of a first implementation of a transmitter according to an embodiment of this application. As shown in FIG. 2(a), in a possible implementation, the transmitter modulates a data stream to obtain a modulated signal. Further, the transmitter performs power spectrum shaping coding on the modulated signal, to compress power of a low-frequency part in the modulated signal, so as to resist impact of low-frequency noise. It should be understood that the transmitter may further interleave a modulated signal obtained through the power spectrum shaping coding, to implement multi-frequency power spectrum compression, so as to resist impact of multi-frequency power attenuation.

FIG. 2(b) is a diagram of a second implementation of a transmitter according to an embodiment of this application. As shown in FIG. 2(b), in another possible implementation, the transmitter modulates a data stream to obtain a modulated signal. Then, the transmitter first interleaves the modulated signal, and then performs power spectrum shaping coding on an interleaved modulated signal. Further, the transmitter de-interleaves, based on how it is interleaved, a modulated signal obtained through the power spectrum shaping coding, to implement multi-frequency power spectrum compression, so as to resist impact of multi-frequency power attenuation.

It should be understood that a specific modulation scheme of the modulated signal is not limited in this application. For example, the modulation scheme includes but is not limited to non-return-to-zero (Non-Return-to-Zero, NRZ) modulation, multilevel pulse amplitude modulation (Multilevel Pulse Amplitude Modulation, PAMn), and the like. The PAMn modulation includes PAM2 modulation, PAM4 modulation, or PAM modulation with a higher level.

It should be noted that the modulation and the power spectrum shaping coding in FIG. 2(a) and FIG. 2(b) are both necessary operations, and are used to compress the power of the low-frequency part in the modulated signal. The interleaving in FIG. 2(a) is an optional operation, and is used to implement the multi-frequency power spectrum compression. The interleaving and the de-interleaving in FIG. 2(b) are also optional operations, and are also used to implement the multi-frequency power spectrum compression.

The following first describes in detail the necessary operations in FIG. 2(a) and FIG. 2(b).

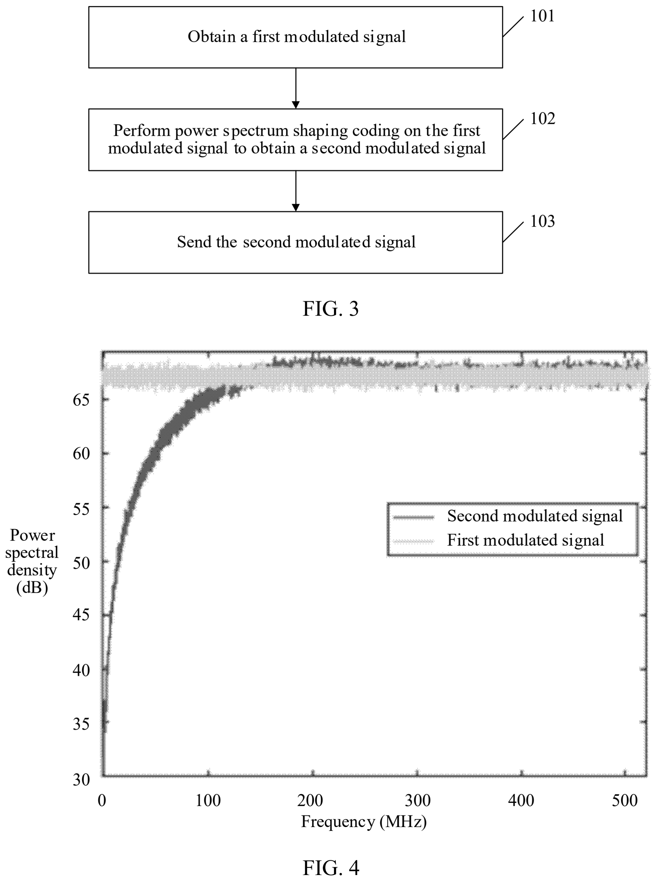

FIG. 3 is a first schematic flowchart of a signal processing method according to an embodiment of this application. In this embodiment, the signal processing method is applied to a transmitter, and the signal processing method includes the following steps.

101: Obtain a first modulated signal.

In this embodiment, the transmitter modulates a data stream to obtain the first modulated signal. The first modulated signal includes M first symbol sets, each first symbol set includes N symbols, and both M and N are integers greater than 1. For example, N is usually an integer multiple of 2. It should be understood that each first symbol set may also be referred to as a symbol block (block), and each symbol in the block may include a plurality of bits.

102: Perform power spectrum shaping coding on the first modulated signal to obtain a second modulated signal.

Specifically, the transmitter inverts a polarity of at least one symbol in at least one first symbol set in the first modulated signal to obtain the second modulated signal. It should be understood that, in the first modulated signal, a specific symbol that is in a specific first symbol set and on which polarity inversion needs to be performed depends on a specific situation. A first symbol set obtained through the symbol polarity inversion is referred to as a second symbol set herein. The second modulated signal still includes $M \times N$ symbols. In other words, the second modulated signal includes both the second symbol set obtained through the symbol polarity inversion and the first symbol set on which no symbol polarity inversion is performed.

It should be noted that the transmitter inverts a polarity of the at least one symbol in the at least one first symbol set, so that an absolute value of a sum of values of all the symbols in the second modulated signal is less than an absolute value of a sum of values of all symbols in the first modulated signal. Further, the sum of the values of all the symbols in the second modulated signal is less than or equal to a maximum value of a single symbol in the second modulated signal. It should be understood that the maximum value of the single symbol depends on a modulation format. For example, a maximum value of a single symbol in PAM4 modulation is +3, and a maximum value of a single symbol in PAM8 modulation is +7. In other words, the sum of the values of all the symbols in the second modulated signal is less than a highest level value of the second modulated signal. In this manner, power of a low-frequency part in the second modulated signal is reduced. This helps perform processing at a receiver to resist impact of low-frequency noise. In a possible implementation, the sum of the values of all the symbols in the second modulated signal is equal to 0, so that a power spectrum of the low-frequency part in the second modulated signal can be compressed to a maximum extent. In some possible scenarios, a value of each symbol may specifically correspond to a level value obtained by modulating the symbol. In an example, a symbol sequence {+1, +1, -1, -1, +1} obtained through NRZ modulation is used as an example. In other words, values of five symbols in the symbol sequence are respectively +1, +1, -1, -1, and +1. In this case, a sum of the values in the symbol sequence is +1. In another example, a symbol sequence {+3, +1, -1, -3, +3} obtained through PAM4 modulation is used as an example. In other words, values of five symbols in the symbol sequence are respectively +3, +1, -1, -3, and +3. In this case, a sum of the values in the symbol sequence is +3. In some other possible scenarios, a value of the symbol is a complex number. For example, quadrature phase shift keying (Quadrature Phase Shift Keying, QPSK) modulation or quadrature amplitude modulation (Quadrature Amplitude Modulation, QAM) is used. For example, in QPSK, a value of each symbol is 1+1j, 1-1j, -1+1j, or -1-1j. Assuming that a symbol sequence is 1+1j, 1-1j, -1+1j, -1-1j, and 1+1j, a sum of values in the symbol sequence is 1+1j, that is, a sum of values of complex numbers is a result obtained by separately adding their real parts and imaginary parts .

The following describes a specific implementation of the power spectrum shaping coding.

An $i^{th}$ first symbol set is used as an example, where $0 \leq i \leq M-1$. The transmitter inverts polarities of all symbols after a $j^{th}$ symbol in the $i^{th}$ first symbol set to obtain an $i^{th}$ second symbol set, where $0 \leq j \leq N-2$. In other words, the transmitter determines a target symbol in the $i^{th}$ first symbol set, denotes the target symbol as the $j^{th}$ symbol, and inverts the polarities of all the symbols after the target symbol. The target symbol may be any one of a $0^{th}$ symbol to an $(N-2)^{th}$ symbol in the $i^{th}$ first symbol set. Therefore, for the $i^{th}$ first symbol set, there are N-1 different symbol polarity inversion manners in total. Correspondingly, the $i^{th}$ first symbol set corresponds to N-1 second symbol sets obtained through symbol polarity inversion. Further, a sum of values of all symbols in each of the N-1 second symbol sets is determined, and a second symbol set in which a sum of values of all symbols is the minimum is selected from the N-1 second symbol sets. A target symbol corresponding to the second symbol set is denoted as $j_{min}$. Therefore, an $i^{th}$ second symbol set obtained by inverting polarities of all symbols after a $j_{min}^{th}$ symbol in the $i^{th}$ first symbol set is finally obtained.

It should be noted that if there are actually a plurality of different target symbols in the $i^{th}$ first symbol set that can be used to obtain a minimum sum of values of all symbols obtained through polarity inversion, one of the target symbols may be selected as an actual inversion point based on how identification information is carried. For example, if the identification information is interleaved at the start or end of each symbol set in the second modulated signal, a target symbol that is in a middle part of the symbol set and that is far away from the start or end is selected as much as possible, to avoid consecutive 0s or consecutive 1s after the identification information is converted into a binary sequence. For another example, if the identification information is transmitted independently of the second modulated signal, any one of the plurality of target symbols may be selected.

In a possible scenario, to make the sum of the values of all the symbols in the second modulated signal equal to 0, it should be ensured that a sum of values of all symbols in each symbol set in the second modulated signal is equal to 0. Specifically, for the M first symbol sets in the first modulated signal, whether a sum of values in each first symbol set is 0 is first determined. An $i^{th}$ first symbol set is used as an example, where $0 \leq i \leq M-1$. If a sum of values of all symbols in the $i^{th}$ first symbol set is 0, polarities of all the symbols in the $i^{th}$ first symbol set are maintained. If a sum of values of all symbols in the $i^{th}$ first symbol set is not 0, a polarity of at least one symbol in the $i^{th}$ first symbol set is inverted to obtain an $i^{th}$ second symbol set, so that a sum of values of all symbols in the $i^{th}$ second symbol set is 0. In this way, the sum of the values in each symbol set in the second modulated signal is 0, and the sum of the values of all the symbols in the second modulated signal is also equal to 0, so that the power spectrum of the low-frequency part in the second modulated signal can be compressed to a maximum extent.

In an example, the transmitter inverts polarities of all symbols after a $j^{th}$ symbol in the $i^{th}$ first symbol set to obtain the $i^{th}$ second symbol set, where $0 \leq j \leq N-2$. Specifically, a sum of values of all N symbols in the $i^{th}$ first symbol set is first calculated, and is denoted as $\sum_{j=0}^{N-1} S_i$. Further, the $j^{th}$ symbol in the $i^{th}$ first symbol set is found, and is denoted as an $N_b^{th}$ symbol in the first symbol set. A sum of values of a $0^{th}$ symbol to the $N_b^{th}$ symbol in the $i^{th}$ first symbol set is equal to half of the sum of the values of all the N symbols in the $i^{th}$ first symbol set, in other words, $\sum_{j=0}^{N_b} S_i = \frac{1}{2}\sum_{j=0}^{N-1} S_i$. Therefore, the sum of the values in the $i^{th}$ second symbol set obtained by inverting the polarities of all the symbols after the target symbol in the $i^{th}$ first symbol set is equal to 0. The NRZ modulation is used as an example. The $i^{th}$ first symbol set is represented as {+1, -1, -1, ... , +1, +1, -1, +1, -1, -1, ...}, and the $i^{th}$ second symbol set corresponding to the $i^{th}$ first symbol set is represented as {+1, -1, -1, ..., +1, +1, +1, -1, +1, +1, ...}. It should be noted that the transmitter may alternatively select, in another manner, some symbols in the $i^{th}$ first symbol set whose polarities need to be inverted, provided that a sum of values of all N symbols in an obtained $i^{th}$ second symbol set is equal to 0. A specific implementation is not limited herein.

In another possible scenario, for the M first symbol sets in the first modulated signal, whether a sum of values in each first symbol set is 0 is first determined. If a sum of values of all symbols in a first symbol set is 0, polarities of all the symbols in the first symbol set are maintained. It may not be strictly required that sums of values in all second symbol sets obtained by performing symbol polarity inversion on some other first symbol sets in which sums of values are not 0 be equal to 0, provided that a sum of overall values in all the second symbol sets is equal to 0. This can also ensure that the sum of the values of all the symbols in the second modulated signal is equal to 0. It should be understood that a specific operation manner is not limited in this application. The following describes several possible examples. Ten second symbol sets obtained through symbol polarity inversion are used as an example. For example, every two second symbol sets are grouped into one group, to implement complete positive and negative cancellation of the two second symbol sets, that is, a sum of overall values in one group including every two second symbol sets is equal to 0. For another example, a sum of overall values in five second symbol sets and a sum of overall values in the other five second symbol sets are used to implement complete positive and negative cancellation.

FIG. 4 is a diagram of compressing a power spectrum of a low-frequency part according to an embodiment of this application. As shown in FIG. 4, a horizontal coordinate represents a frequency (unit: MHz), and a vertical coordinate represents a power spectral density (unit: dB). PAM4 modulation is used as an example, and each block includes 256 symbols. It can be learned that the power spectrum of the low-frequency part in the second modulated signal obtained through the power spectrum shaping coding is compressed, and 3 dB bandwidth is 80 MHz.

103: Send the second modulated signal.

The second modulated signal sent by the transmitter is transmitted to the receiver through a channel.

It should be noted that, to help the receiver restore, after direct current removal, the first modulated signal that is before the transmitter performs power spectrum shaping coding, the transmitter further needs to send identification information to the receiver, to indicate a polarity inversion status of each symbol set in the second modulated signal. In this way, the receiver may invert polarities of some symbols again based on the identification information, to obtain the original modulated signal from the transmitter. In an example, when the transmitter inverts polarities of all symbols after a target symbol in the $i^{th}$ first symbol set, the identification information specifically indicates a position of the target symbol. It should be noted that the second modulated signal and the identification information may be sent together to the receiver through the channel. Alternatively, the identification information may be independent of the second modulated signal, and sent to the receiver through another channel.

In a possible implementation, the identification information includes M indicator bits that are in one-to-one correspondence with M symbol sets in the second modulated signal, and each indicator bit indicates polarity inversion statuses of symbols in a corresponding symbol set. The M indicator bits may be interleaved in the M symbol sets in the second modulated signal. For example, each indicator bit is closely adjacent to a start position of a symbol set corresponding to the indicator bit. For another example, each indicator bit is closely adjacent to an end position of a symbol set corresponding to the indicator bit. For still another example, each indicator bit may alternatively be inserted into any position in a symbol set corresponding to the indicator bit. This is not specifically limited herein.

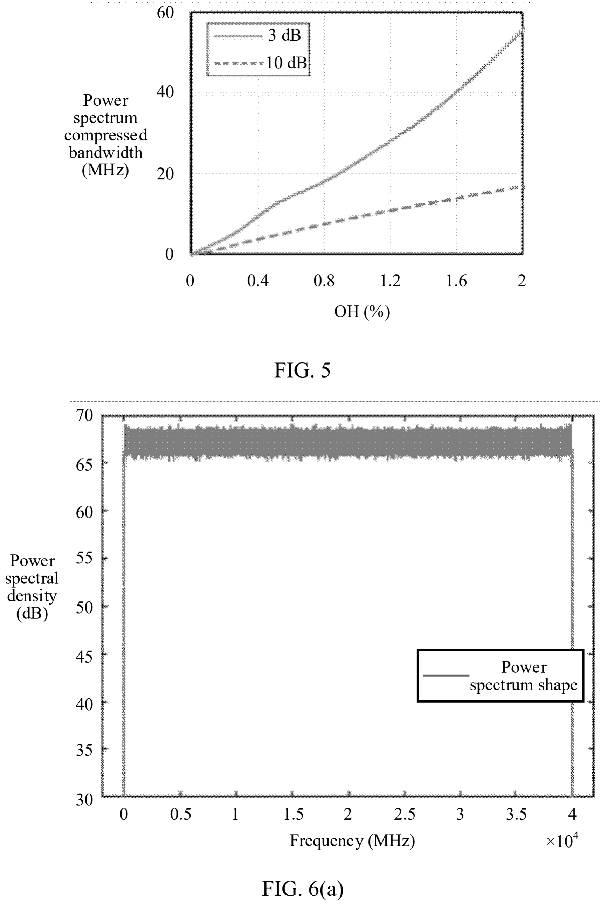

FIG. 5 is a diagram of a correspondence between an OH and compressed bandwidth according to an embodiment of this application. It should be noted that the identification information may also be referred to as an overhead (overhead, OH). As shown in FIG. 5, a horizontal coordinate represents a proportion of the OH in a block, and a vertical coordinate represents power spectrum compressed bandwidth (unit: MHz). A correspondence between the OH and a length $N_b$ of the block is: $OH = log_2 N_b/(log_2 N_b + N_b)$. It can be learned that, as the OH increases, power spectrum compressed bandwidth of a signal also increases, and a suppression effect on a low frequency is better, but redundant information also increases correspondingly.

The following first separately describes in detail the optional operations in FIG. 2(a) and FIG. 2(b).

In a possible scenario, as shown in FIG. 2(a), the transmitter may further interleave the second modulated signal to re-sort the symbols in the second modulated signal, so as to compress power spectra at a plurality of different frequency positions. In other words, for an interleaved second modulated signal, in addition to a low-frequency part of a power spectrum being compressed, another frequency like an intermediate-frequency part or a high-frequency part of the power spectrum can be further compressed. The following describes a possible interleaving manner. For example, the second modulated signal includes $N_{shape}$ symbol groups, each symbol group includes K symbols, $M \times N = N_{shape} \times K$, $N_{shape}$ is an integer greater than 1, and K is an integer greater than 1. It should be understood that the symbol group herein is not equivalent to the block described above, and $N_{shape}$ of the symbol group is determined based on a power spectrum frequency that is expected to be compressed. The interleaved second modulated signal is represented as: {a $0^{th}$ symbol in a $0^{th}$ symbol group, a $0^{th}$ symbol in a $1^{st}$ symbol group, ..., a $0^{th}$ symbol in an $(N_{shape} - 1)^{th}$ symbol group, a $1^{st}$ symbol in the $0^{th}$ symbol group, a $1^{st}$ symbol in the $1^{st}$ symbol group, ..., a $1^{st}$ symbol in the $(N_{shape} - 1)^{th}$ symbol group, ..., a $(K-1)^{th}$ symbol in the $0^{th}$ symbol group, a $(K-1)^{th}$ symbol in the $1^{st}$ symbol group, ..., a $(K-1)^{th}$ symbol in the $(N_{shape} - 1)^{th}$ symbol group}.

In another possible scenario, as shown in FIG. 2(b), before performing power spectrum shaping coding on the first modulated signal, the transmitter first interleaves the first modulated signal to re-sort the symbols in the first modulated signal. Next, the transmitter performs power spectrum shaping coding on an interleaved first modulated signal. For a specific implementation of the power spectrum shaping coding, refer to the related descriptions in step 102. Details are not described herein again. Further, the transmitter de-interleaves the second modulated signal obtained through the power spectrum shaping coding, where the de-interleaving may be considered as an inverse processing operation of the interleaving, and a corresponding de-interleaving operation is performed according to an interleaving rule to restore an original symbol sequence. It should be understood that, for a de-interleaved second modulated signal, in addition to a low-frequency part of a power spectrum being compressed, another frequency like an intermediate-frequency part or a high-frequency part of the power spectrum can be further compressed. The following describes a possible interleaving manner. For example, each first symbol set in the first modulated signal includes R consecutive symbol subsets, each symbol subset includes L symbols, $N = R \times L$, R is an integer greater than 1, and L is an integer greater than 1. In this case, a first symbol set in the interleaved first modulated signal is represented as: {a $0^{th}$ symbol in a $0^{th}$ symbol subset, a $0^{th}$ symbol in a $1^{st}$ symbol subset, ..., a $0^{th}$ symbol in an $(R - 1)^{th}$ symbol subset, a $1^{st}$ symbol in the $0^{th}$ symbol subset, a $1^{st}$ symbol in the $1^{st}$

symbol subset, ..., a 1st symbol in the (R - 1)th symbol subset, ..., an (L-1)th symbol in the 0th symbol subset, an (L-1)th symbol in the 1st symbol subset, ..., an (L-1)th symbol in the (R - 1)th symbol subset}.

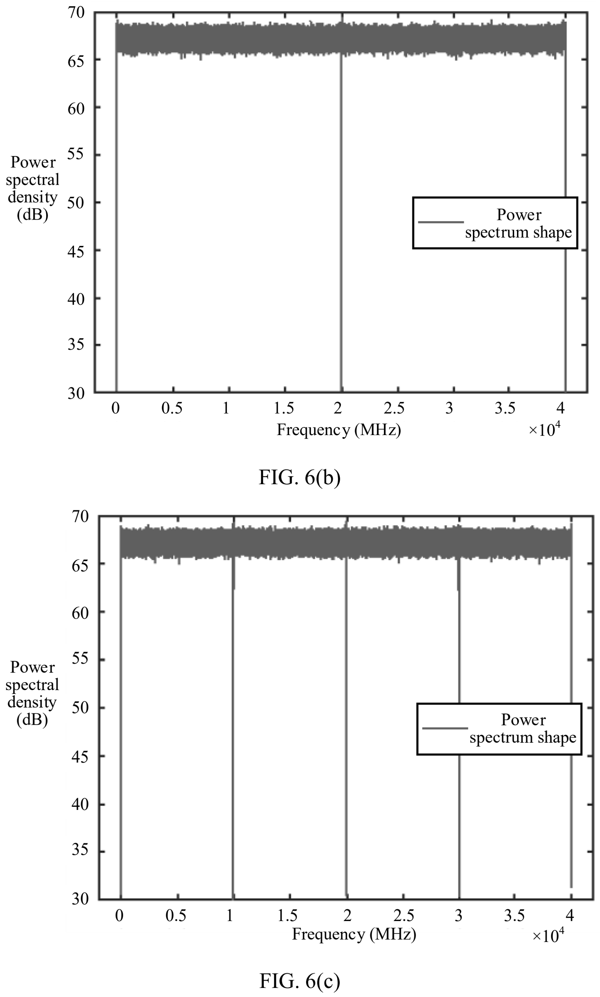

It should be noted that, in the scenario shown in FIG. 2(a), a power spectrum compressed frequency corresponding to the second modulated signal output by the transmitter depends on a value of $N_{shape}$. Table 1 below provides power spectrum compressed frequencies respectively corresponding to several typical values of $N_{shape}$, that is, the values of $N_{shape}$ include but are not limited to 2, 4, and 8. FIG. 6(a) to FIG. 6(c) show several possible compressed frequency positions in a power spectrum. As shown in FIG. 6(a) to FIG. 6(c), a horizontal coordinate represents a frequency (unit: MHz), and a vertical coordinate represents a power spectral density (unit: dB). FIG. 6(a) shows a compressed frequency position in the power spectrum when $N_{shape} = 2$, FIG. 6(b) shows a compressed frequency position in the power spectrum when $N_{shape} = 4$, and FIG. 6(c) shows a compressed frequency position in the power spectrum when $N_{shape} = 8$. In Table 1, the power spectrum compressed frequency represents a relative position of the compressed frequency in a frequency coverage area of the power spectrum. As shown in FIG. 6(a) to FIG. 6(c), an example in which the frequency coverage area of the power spectrum is 0 MHz to $4 \times 10^4$ MHz is used. For example, the compressed frequency being 1/2 represents that the compressed frequency is in the middle of the frequency coverage area of the power spectrum, that is, is $2 \times 10^4$ MHz. For another example, the compressed frequency being 1/4 represents that the compressed frequency is at 1/4 of the frequency coverage area of the power spectrum, that is, is $1 \times 10^4$ MHz. For still another example, the compressed frequency being 3/4 represents that the compressed frequency is at 3/4 of the frequency coverage area of the power spectrum, that is, is $3 \times 10^4$ MHz.

In the scenario shown in FIG. 2(b), a power spectrum compressed frequency corresponding to the second modulated signal output by the transmitter depends on a value of L = N/R, that is, when values of L are 2, 4, and 8 respectively, compressed frequency positions in the power spectrum are shown in FIG. 6(a) to FIG. 6(c).

Table 1

| Sequence number | $N_{shape}$ or L | Power spectrum compressed frequency |
|---|---|---|
| 1 | 2 | 0 and 1 |
| 2 | 4 | 0, 1/2, and 1 |
| 3 | 8 | 0, 1/4, 1/2, 3/4, and 1 |

It can be learned from the foregoing descriptions that the transmitter inverts polarities of some symbols in the first modulated signal to obtain the second modulated signal, so that the sum of the values of all the symbols in the second modulated signal is equal to 0. In this way, the power of the low-frequency part in the second modulated signal is suppressed. This helps resist impact of the low-frequency noise on the channel on transmission performance. Compared with a manner of performing channel compensation at the receiver, the processing manner at the transmitter has lower complexity.

The following describes a processing procedure of the receiver.

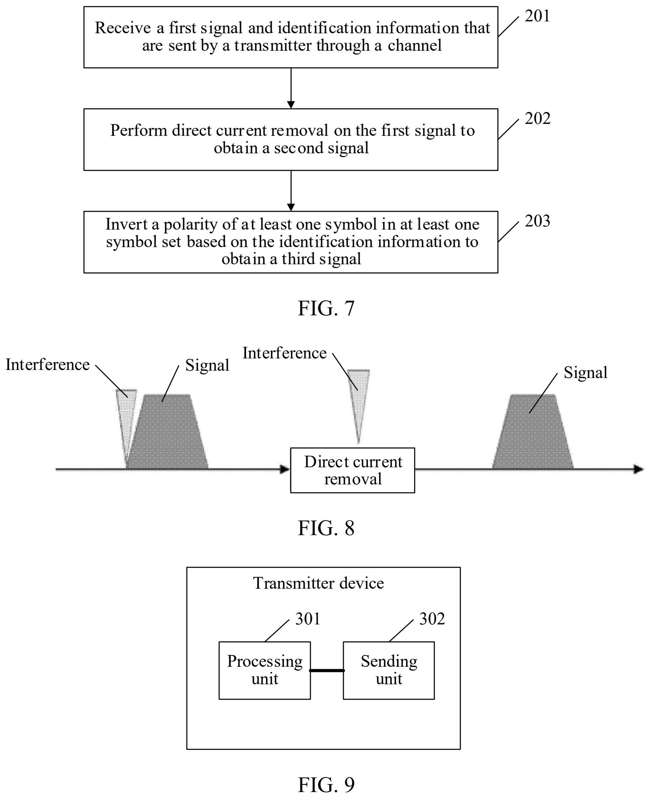

FIG. 7 is a second schematic flowchart of a signal processing method according to an embodiment of this application. In this embodiment, the signal processing method is applied to a receiver, and the signal processing method includes the following steps.

201: Receive a first signal and identification information that are sent by a transmitter through a channel.

It should be noted that the first signal received by the receiver includes a signal sent by the transmitter and interference in channel transmission. Because the transmitter inverts polarities of some symbols in an original signal before sending the signal, the identification information indicates polarity inversion statuses of symbols in the signal sent by the transmitter, so that the receiver restores the original signal of the transmitter based on the identification information.

202: Perform direct current removal on the first signal to obtain a second signal.

FIG. 8 is a diagram of performing direct current removal by a receiver according to an embodiment of this application. It should be understood that low-frequency interference exists on the channel, and power of the signal sent by the transmitter at a low frequency is suppressed, so that the sent signal does not overlap the interference in frequency. The receiver can remove the interference through the direct current removal and cause no impairment to the signal from the transmitter. In other words, the second signal obtained by the receiver through the direct current removal may be considered as the signal sent by the transmitter. It can be learned from the related descriptions of the embodiment shown in FIG. 3 that the second signal includes M symbol sets, each symbol set includes N symbols, M is an integer greater than 1, and N is an integer greater than 1.

203: Invert a polarity of at least one symbol in at least one symbol set based on the identification information to obtain a third signal.

The receiver determines, based on the identification information, a symbol that is in a symbol set in the second signal and on which polarity inversion needs to be performed, and then inverts a polarity of the symbol, to restore a modulated signal that is before the transmitter performs power spectrum shaping coding. In other words, the operation of step 203 may be considered as an inverse operation of step 102. The third signal may be considered as the original signal that is before the transmitter performs power spectrum shaping coding.

In an example, the transmitter uses PAM4 modulation, each symbol set in the second signal includes 256 symbols, and a corresponding indicator bit is inserted at the end of each symbol set. The receiver determines a length of the indicator bit based on a size of the symbol set, that is, $\log_2 256 = 8$. For example, a symbol sequence including a symbol set and an indicator bit is [..., -3, 1, 3, -1, 3, 1, -3, 1, -3, 3, 1, -1, ..., -3, 3, 3, -1, 3, -1, -3, 1], and the indicator bit is represented by using eight symbols at the end of the symbol sequence. The receiver converts the indicator bit [-3, 3, 3, -1, 3, -1, -3, 1] into binary information [01101001] whose decimal number is 105. Therefore, the receiver inverts polarities of a $106^{th}$ symbol to a $256^{th}$ symbol in the symbol set, and a symbol set obtained through the symbol polarity inversion is represented as [..., -3, 1, 3, -1, 3, 1, -3, 3, -1, 1, ...].

It should be noted that, in some possible scenarios, as shown in FIG. 2(a), if the transmitter outputs an interleaved modulated signal, the receiver further needs to first perform a de-interleaving operation on a received modulated signal before performing direct current removal.

FIG. 9 is a diagram of a structure of a transmitter device according to an embodiment of this application. As shown in FIG. 9, the transmitter device includes a processing unit 301 and a sending unit 302. The processing unit 301 is configured to perform the operations of step 101 and step 102, and the sending unit 302 is configured to perform the operation of step 103. Optionally, the processing unit 301 is further configured to perform the interleaving operation shown in FIG. 2(a), or the processing unit 301 is further configured to perform the interleaving operation and the de-interleaving operation shown in FIG. 2(a).

It should be understood that the transmitter device provided in this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

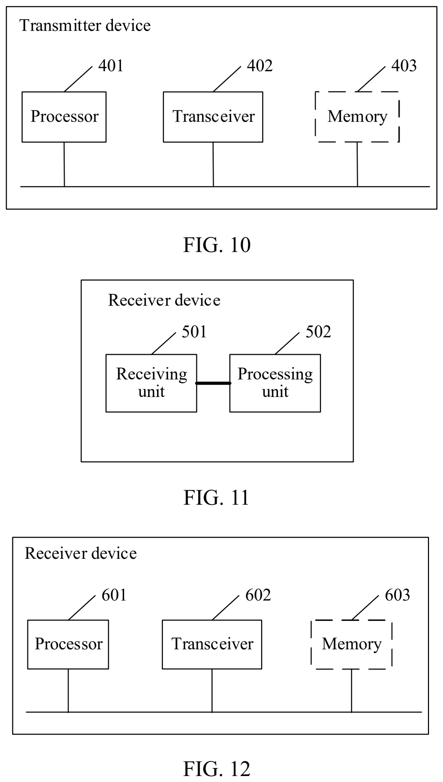

FIG. 10 is a diagram of another structure of a transmitter device according to an embodiment of this application. As shown in FIG. 10, the transmitter device includes a processor 401 and a transceiver 402. The processor 401 and the transceiver 402 are connected to each other through a line. Specifically, the transceiver 402 is configured to perform signal receiving and sending operations, and the processor 401 is configured to perform other operations than signal receiving and sending. In a possible implementation, the processor 401 may include the processing unit 301 shown in FIG. 9, and the transceiver 402 includes the sending unit 302 shown in FIG. 9. Optionally, the transmitter device may further include a memory 403, where the memory 403 is configured to store program instructions and data.

FIG. 11 is a diagram of a structure of a receiver device according to an embodiment of this application. As shown in FIG. 11, the receiver device includes a receiving unit 501 and a processing unit 502. The receiving unit 501 is configured to perform the operation of step 201, and the processing unit 502 is configured to perform the operations of step 202 and step 203.

It should be understood that the receiver device provided in this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

FIG. 12 is a diagram of another structure of a receiver device according to an embodiment of this application. As shown in FIG. 12, the receiver device includes a processor 601 and a transceiver 602. The processor 601 and the transceiver 602 are connected to each other through a line. Specifically, the transceiver 602 is configured to perform signal receiving and sending operations, and the processor 601 is configured to perform other operations than signal receiving and sending. In a possible implementation, the processor 601 may include the processing unit 502 shown in FIG. 11, and the transceiver 602 includes the receiving unit 501 shown in FIG. 11. Optionally, the receiver device may further include a memory 603, where the memory 603 is configured to store program instructions and data.

An embodiment of this application further provides a chip. A circuit and one or more interfaces that are configured to implement a function of the processor 401 or the processor 601 are integrated into the chip. When a memory is integrated into the chip, the chip may complete the method steps in any one or more of the foregoing embodiments. When no memory is integrated into the chip, the chip may be connected to an external memory through an interface. The chip implements, based on program code stored in the external memory, actions performed by the transmitter device or the receiver device in the foregoing embodiments.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal processing method, comprising:

   obtaining a first modulated signal, wherein the first modulated signal comprises M first symbol sets, each first symbol set comprises N symbols, M is an integer greater than 1, and N is an integer greater than 1;
   inverting a polarity of at least one symbol in at least one first symbol set in the first modulated signal to obtain a second modulated signal comprising $M \times N$ symbols, wherein an absolute value of a sum of values of all the symbols in the second modulated signal is less than an absolute value of a sum of values of all symbols in the first modulated signal; and
   sending the second modulated signal.

2. The method according to claim 1, wherein the inverting the polarity of the at least one symbol in the at least one first symbol set in the first modulated signal comprises:

   determining a value $j_{min}$ of j corresponding to a minimum sum of values of all symbols in an $i^{th}$ second symbol set, wherein the $i^{th}$ second symbol set is obtained by inverting polarities of all symbols after a $j^{th}$ symbol in the $i^{th}$ first symbol set, $0 \leq i \leq M-1$, and $0 \leq j \leq N-2$; and
   inverting polarities of all symbols after a $j_{min}{}^{th}$ symbol in the $i^{th}$ first symbol set.

3. The method according to claim 2, wherein the method further comprises:
   generating identification information, wherein the identification information indicates a position of the $j_{min}{}^{th}$ symbol in the $i^{th}$ first symbol set.

4. The method according to claim 1, wherein the sum of the values of all the symbols in the second modulated signal is equal to 0.

5. The method according to claim 4, wherein the inverting the polarity of the at least one symbol in the at least one first symbol set in the first modulated signal comprises:

   obtaining a sum of values of all symbols in an $i^{th}$ first symbol set, wherein $0 \leq i \leq M-1$; and
   if the sum of the values of all the symbols in the $i^{th}$ first symbol set is equal to 0, keeping polarities of all the symbols in the $i^{th}$ first symbol set unchanged; or
   if the sum of the values of all the symbols in the $i^{th}$ first symbol set is not equal to 0, inverting a polarity of at least one symbol in the $i^{th}$ first symbol set to obtain an $i^{th}$ second symbol set, wherein a sum of values of all symbols in the $i^{th}$ second symbol set is equal to 0.

6. The method according to claim 5, wherein the inverting the polarity of the at least one symbol in the $i^{th}$ first symbol set to obtain the $i^{th}$ second symbol set comprises:
   inverting polarities of all symbols after a $j^{th}$ symbol in the $i^{th}$ first symbol set to obtain the $i^{th}$ second symbol set, wherein $0 \leq j \leq N-2$.

7. The method according to claim 6, wherein the method further comprises:
   generating identification information, wherein the identification information indicates a position of a $j^{th}$ symbol in the $i^{th}$ second symbol set.

8. The method according to any one of claims 1 to 7, wherein before the sending the second modulated signal, the method further comprises:
   interleaving the symbols in the second modulated signal.

9. The method according to claim 8, wherein the second modulated signal comprises $N_{shape}$ symbol groups, each symbol group comprises K symbols, $M \times N = N_{shape} \times K$, $N_{shape}$ is an integer greater than 1, K is an integer greater than 1, and an interleaved second modulated signal is represented as:

{a $0^{th}$ symbol in a $0^{th}$ symbol group, a $0^{th}$ symbol in a $1^{st}$ symbol group, ..., a $0^{th}$ symbol in an $(N_{shape} - 1)^{th}$ symbol group, a $1^{st}$ symbol in the $0^{th}$ symbol group, a $1^{st}$ symbol in the $1^{st}$ symbol group, ..., a $1^{st}$ symbol in the $(N_{shape} - 1)^{th}$ symbol group, ..., a $(K-1)^{th}$ symbol in the $0^{th}$ symbol group, a $(K-1)^{th}$ symbol in the $1^{st}$ symbol group, ..., a $(K-1)^{th}$ symbol in the $(N_{shape} - 1)^{th}$ symbol group}.

10. The method according to any one of claims 1 to 7, wherein after the obtaining the first modulated signal, and before the inverting the polarity of the at least one symbol in the at least one first symbol set in the first modulated signal to obtain the second modulated signal comprising the M×N symbols, the method further comprises:

   interleaving the symbols in each first symbol set in the first modulated signal; and
   after the inverting the polarity of the at least one symbol in the at least one first symbol set in the first modulated signal to obtain the second modulated signal comprising the M×N symbols, and before the sending the second modulated signal, the method further comprises:
   de-interleaving the symbols in the second modulated signal based on how they are interleaved.

11. The method according to claim 10, wherein each first symbol set in the first modulated signal comprises R consecutive symbol subsets, each symbol subset comprises L symbols, $N=R \times L$, R is an integer greater than 1, L is an integer greater than 1, and a first symbol set in an interleaved first modulated signal is represented as:
   {a $0^{th}$ symbol in a $0^{th}$ symbol subset, a $0^{th}$ symbol in a $1^{st}$ symbol subset, ..., a $0^{th}$ symbol in an $(R - 1)^{th}$ symbol subset, a $1^{st}$ symbol in the $0^{th}$ symbol subset, a $1^{st}$ symbol in the $1^{st}$ symbol subset, ..., a $1^{st}$ symbol in the $(R - 1)^{th}$ symbol subset, ..., an $(L-1)^{th}$ symbol in the $0^{th}$ symbol subset, an $(L-1)^{th}$ symbol in the $1^{st}$ symbol subset, ..., an $(L-1)^{th}$ symbol in the $(R - 1)^{th}$ symbol subset}.

12. A signal processing method, comprising:

   receiving a first signal and identification information that are sent by a transmitter through a channel;
   performing direct current removal on the first signal to obtain a second signal, wherein the second signal comprises M symbol sets, each symbol set comprises N symbols, M is an integer greater than 1, N is an integer greater than 1, and the identification information indicates polarity inversion statuses of the symbols in each symbol set; and
   inverting a polarity of at least one symbol in at least one symbol set based on the identification information to obtain a third signal comprising M×N symbols.

13. The method according to claim 12, wherein the inverting the polarity of the at least one symbol in the at least one second symbol set based on the identification information comprises:

   determining a $j^{th}$ symbol in an $i^{th}$ second symbol set based on the identification information, wherein $0 \leq i \leq M-1$, and $0 \leq j \leq N-2$; and
   inverting polarities of all symbols after the $j^{th}$ symbol in the $i^{th}$ second symbol set.

14. A chip, wherein the chip comprises a processor and a memory, the memory and the processor are connected to each other through a line, the memory stores instructions, and the processor is configured to perform the method according to any one of claims 1 to 13.

15. A transmitter device, comprising a processing unit and a sending unit, wherein

   the processing unit is configured to: obtain a first modulated signal, wherein the first modulated signal comprises M first symbol sets, each first symbol set comprises N symbols, M is an integer greater than 1, and N is an integer greater than 1; and
   invert a polarity of at least one symbol in at least one first symbol set in the first modulated signal to obtain a second modulated signal comprising M×N symbols, wherein an absolute value of a sum of values of all the symbols in the second modulated signal is less than an absolute value of a sum of values of all symbols in the first modulated signal; and
   the sending unit is configured to send the second modulated signal.

16. The transmitter device according to claim 15, wherein the processing unit is specifically configured to:

   determine a value $j_{min}$ of j corresponding to a minimum sum of values of all symbols in an $i^{th}$ second symbol set, wherein the $i^{th}$ second symbol set is obtained by inverting polarities of all symbols after a $j^{th}$ symbol in the $i^{th}$ first symbol set, $0 \leq i \leq M-1$, and $0 \leq j \leq N-2$; and

invert polarities of all symbols after a $j_{min}^{th}$ symbol in the $i^{th}$ first symbol set.

17. The transmitter device according to claim 16, wherein the processing unit is further configured to:
generate identification information, wherein the identification information indicates a position of the $j_{min}^{th}$ symbol in the $i^{th}$ first symbol set.

18. The transmitter device according to claim 15, wherein the sum of the values of all the symbols in the second modulated signal is equal to 0.

19. The transmitter device according to claim 18, wherein the processing unit is specifically configured to:

obtain a sum of values of all symbols in an $i^{th}$ first symbol set, wherein $0 \leq i \leq M-1$; and

if the sum of the values of all the symbols in the $i^{th}$ first symbol set is equal to 0, keep polarities of all the symbols in the $i^{th}$ first symbol set unchanged; or

if the sum of the values of all the symbols in the $i^{th}$ first symbol set is not equal to 0, invert a polarity of at least one symbol in the $i^{th}$ first symbol set to obtain an $i^{th}$ second symbol set, wherein a sum of values of all symbols in the $i^{th}$ second symbol set is equal to 0.

20. The transmitter device according to claim 19, wherein the processing unit is specifically configured to:
invert polarities of all symbols after a $j^{th}$ symbol in the $i^{th}$ first symbol set to obtain the $i^{th}$ second symbol set, wherein $0 \leq j \leq N-2$.

21. The transmitter device according to claim 20, wherein the processing unit is further configured to:
generate identification information, wherein the identification information indicates a position of a $j^{th}$ symbol in the $i^{th}$ second symbol set.

22. The transmitter device according to any one of claims 15 to 21, wherein before sending the second modulated signal, the processing unit is further configured to:
interleave the symbols in the second modulated signal.

23. The transmitter device according to claim 22, wherein the second modulated signal comprises $N_{shape}$ symbol groups, each symbol group comprises K symbols, $M \times N = N_{shape} \times K$, $N_{shape}$ is an integer greater than 1, K is an integer greater than 1, and an interleaved second modulated signal is represented as:
{a $0^{th}$ symbol in a $0^{th}$ symbol group, a $0^{th}$ symbol in a $1^{st}$ symbol group, ..., a $0^{th}$ symbol in an $(N_{shape} - 1)^{th}$ symbol group, a $1^{st}$ symbol in the $0^{th}$ symbol group, a $1^{st}$ symbol in the $1^{st}$ symbol group, ..., a $1^{st}$ symbol in the $(N_{shape} - 1)^{th}$ symbol group, ..., a $(K-1)^{th}$ symbol in the $0^{th}$ symbol group, a $(K-1)^{th}$ symbol in the $1^{st}$ symbol group, ..., a $(K-1)^{th}$ symbol in the $(N_{shape} - 1)^{th}$ symbol group}.

24. The transmitter device according to any one of claims 15 to 21, wherein after obtaining the first modulated signal, and before inverting the polarity of the at least one symbol in the at least one first symbol set in the first modulated signal to obtain the second modulated signal comprising the $M \times N$ symbols, the processing unit is further configured to:

interleave the symbols in each first symbol set in the first modulated signal; and

after inverting the polarity of the at least one symbol in the at least one first symbol set in the first modulated signal to obtain the second modulated signal comprising the $M \times N$ symbols, and before sending the second modulated signal, the processing unit is further configured to:

de-interleave the symbols in the second modulated signal based on how they are interleaved.

25. The transmitter device according to claim 24, wherein each first symbol set in the first modulated signal comprises R consecutive symbol subsets, each symbol subset comprises L symbols, $N = R \times L$, R is an integer greater than 1, L is an integer greater than 1, and a first symbol set in an interleaved first modulated signal is represented as:
{a $0^{th}$ symbol in a $0^{th}$ symbol subset, a $0^{th}$ symbol in a $1^{st}$ symbol subset, ..., a $0^{th}$ symbol in an $(R - 1)^{th}$ symbol subset, a $1^{st}$ symbol in the $0^{th}$ symbol subset, a $1^{st}$ symbol in the $1^{st}$ symbol subset, ..., a $1^{st}$ symbol in the $(R - 1)^{th}$ symbol subset, ..., an $(L-1)^{th}$ symbol in the $0^{th}$ symbol subset, an $(L-1)^{th}$ symbol in the $1^{st}$ symbol subset, ..., an $(L-1)^{th}$ symbol in the $(R - 1)^{th}$ symbol subset}.

26. A receiver device, comprising a receiving unit and a processing unit, wherein

the receiving unit is configured to receive a first signal and identification information that are sent by a transmitter through a channel; and

the processing unit is configured to: perform direct current removal on the first signal to obtain a second signal, wherein the second signal comprises M symbol sets, each symbol set comprises N symbols, M is an integer greater than 1, N is an integer greater than 1, and the identification information indicates polarity inversion statuses of the symbols in each symbol set; and

invert a polarity of at least one symbol in at least one symbol set based on the identification information to obtain a third signal comprising M×N symbols.

27. The receiver device according to claim 26, wherein the processing unit is specifically configured to:

determine a $j^{th}$ symbol in an $i^{th}$ second symbol set based on the identification information, wherein $0 \leq i \leq M-1$, and $0 \leq j \leq N-2$; and

invert polarities of all symbols after the $j^{th}$ symbol in the $i^{th}$ second symbol set.

28. A communication system, comprising the transmitter device according to any one of claims 15 to 25 and the receiver device according to claim 26 or 27.

FIG. 1

FIG. 2(a)

FIG. 2(b)

Obtain a first modulated signal — 101

Perform power spectrum shaping coding on the first modulated signal to obtain a second modulated signal — 102

Send the second modulated signal — 103

FIG. 3

FIG. 4

FIG. 5

FIG. 6(a)

FIG. 6(b)

FIG. 6(c)

```
┌─────────────────────────────────────────────────────┐
│ Receive a first signal and identification information │ ⟋ 201
│ that are sent by a transmitter through a channel      │
└─────────────────────────────────────────────────────┘
                          │
                          ▼
┌─────────────────────────────────────────────────────┐
│ Perform direct current removal on the first signal to │ ⟋ 202
│ obtain a second signal                                │
└─────────────────────────────────────────────────────┘
                          │
                          ▼
┌─────────────────────────────────────────────────────┐
│ Invert a polarity of at least one symbol in at least  │ ⟋ 203
│ one symbol set based on the identification information │
│ to obtain a third signal                              │
└─────────────────────────────────────────────────────┘
```

FIG. 7

FIG. 8

FIG. 9

Transmitter device

401

Processor

402

Transceiver

403

Memory

## FIG. 10

Receiver device

501

Receiving unit

502

Processing unit

## FIG. 11

Receiver device

601

Processor

602

Transceiver

603

Memory

## FIG. 12

# EP 4 742 562 A1

## INTERNATIONAL SEARCH REPORT

| International application No. |
| --- |
| **PCT/CN2024/103564** |

### A. CLASSIFICATION OF SUBJECT MATTER

H04B 10/564(2013.01)i

According to International Patent Classification (IPC) or to both national classification and IPC

### B. FIELDS SEARCHED

Minimum documentation searched (classification system followed by classification symbols)

IPC:H04B H04W

Documentation searched other than minimum documentation to the extent that such documents are included in the fields searched

Electronic data base consulted during the international search (name of data base and, where practicable, search terms used)

CNTXT: CNKI: VEN; ENTXT; 3GPP: 信号, 符号, 时延, 延迟, 延时, 极性, 翻转, 绝对值, 取值, 测算, 求和, 位置, 标识, 交织, 集合, 正交, symbol, modulation, block, QAM, QPSK, NRZ, PAM, delay, interleaving, identifier, calculating, absolute, value, transmission, sequence, group

### C. DOCUMENTS CONSIDERED TO BE RELEVANT

| Category* | Citation of document, with indication, where appropriate, of the relevant passages | Relevant to claim No. |
| --- | --- | --- |
| A | CN 109525359 A (HUAWEI TECHNOLOGIES CO., LTD.) 26 March 2019 (2019-03-26) description, paragraphs [0005]-[0290], and figures 1-18 | 1-28 |
| A | CN 114337910 A (ZTE CORP.) 12 April 2022 (2022-04-12) entire document | 1-28 |
| A | CN 115622661 A (DATANG MOBILE COMMUNICATIONS EQUIPMENT CO., LTD.) 17 January 2023 (2023-01-17) entire document | 1-28 |
| A | WO 2022228513 A1 (VIVO MOBILE COMMUNICATION CO., LTD.) 03 November 2022 (2022-11-03) entire document | 1-28 |
| A | 余忠洋等 (YU, Zhongyang et al.). "基于LoRa的卫星物联网系统接收机同步与非相干软解调方案 (Receiver Synchronization and Nonconherent Soft Demodulation Scheme for LoRa-Based Satellite IoT Systems)" 电子学报 (*Acta Electronica Sinica*). Vol. 51, No. 5, 15 May 2023 (2023-05-15), entire document | 1-28 |

☐ Further documents are listed in the continuation of Box C.　☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **12 September 2024** | **02 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/103564**

| Patent document cited in search report | | | Publication date (day/month/year) | Patent family member(s) | | | Publication date (day/month/year) |
|---|---|---|---|---|---|---|---|
| CN | 109525359 | A | 26 March 2019 | US | 2020220752 | A1 | 09 July 2020 |
| | | | | US | 11251997 | B2 | 15 February 2022 |
| | | | | EP | 3664550 | A1 | 10 June 2020 |
| | | | | EP | 3664550 | A4 | 09 September 2020 |
| | | | | EP | 3664550 | B1 | 24 August 2022 |
| | | | | WO | 2019052388 | A1 | 21 March 2019 |
| CN | 114337910 | A | 12 April 2022 | None | | | |
| CN | 115622661 | A | 17 January 2023 | None | | | |
| WO | 2022228513 | A1 | 03 November 2022 | None | | | |

**EP 4 742 562 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311034394